# EUROPEAN PATENT APPLICATION

(11) **EP 4 024 150 A1**
(43) Date of publication of application: **06.07.2022**
(21) Application number: 21849745.1
(22) Date of filing: 01.02.2021
(51) Int. Cl.: G05B 19/418

(54) **AUTOMATIC DETERMINATION METHOD FOR QUALITY STATE OF SELF-PIERCING RIVETING PROCESS**

(30) Priority: 29.07.2020 CN 202010745833
(71) Applicant: Jee Technology Co., Ltd., Hefei, Anhui 230051 (CN)
(72) Inventor: LIU, Lei, Hefei, Anhui 230051 (CN); LIANG, Duan, Hefei, Anhui 230051 (CN); LIU, Hongjie, Hefei, Anhui 230051 (CN); TANG, Donghua, Hefei, Anhui 230051 (CN)
(74) Representative: Osterhoff, Utz
(86) International application number: PCT/CN2021/074616
(87) International publication number: WO 2022/021828

(57) **Abstract**

Provided is an automatic determination method for the quality state of a self-piercing riveting process, comprising the following steps: standard value input (S1), real-time data acquisition (S2), and data comparison and riveting quality determination (S3). According to the automatic determination method for the quality state of a self-piercing riveting process, a riveting parameter and a process curve of a riveting process are obtained in real time by a data acquisition system, an actual measurement value for determining the quality state of the riveting process is then calculated according to the real-time change in a riveting pressure curve and lap joint information of riveted plates, and the actual measurement value is compared with a set standard value to automatically determine the quality state of the riveting process. The quality monitoring efficiency is improved, the full detection of riveting points is realized, body in white scrappage caused by riveting quality failures is greatly reduced, body in white mass production having undiscoverable quality defects is avoided, and body in white riveting quality is ensured.

## Description

### TECHNICAL FIELD

The present invention relates to the technical field of white vehicle riveting processes, in particular to a method for automatically determining quality of a self-piercing riveting process.

### BACKGROUND

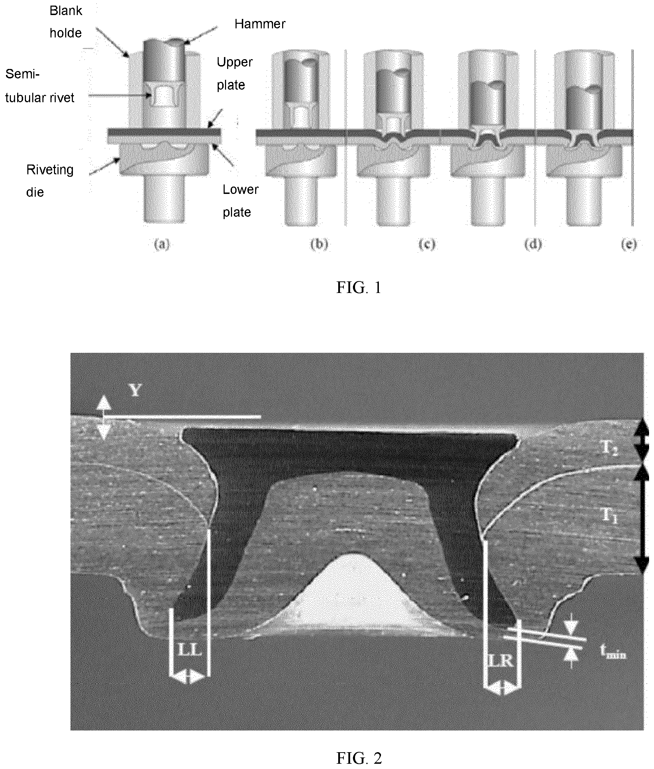

The self-piercing riveting process (SPR) is one of the common processes for connections of the aluminum alloy vehicle body. The SPR is a brand-new plate connection technology for white vehicle bodies of the automobiles, which is to directly press the rivet into the to-be-riveted plates, namely the upper plate and the lower plate through the hydraulic cylinder or the servo motor, the to-be-riveted plates, namely the upper plate and the lower plate, are plastically deformed under the pressure of the rivet, such as the semi-tubular rivet or the like, and then fills the riveting die, as shown in (a) to (e) of FIG. 1, so as to form a stably connection. Whether the SPR riveting is qualified or not has an important effect on the strength of the automobile.

In the related art, the following important parameters are considered when the riveting quality is judged: 1) Tₘᵢₙ (in mm): the minimum thickness of the remaining material: the remaining thinnest portion of the to-be-riveted plates after plastic deformation occurs adjacent to the edge of the riveting die; 2) LL (in mm): the horizontal distance between the left tip of the tail portion of the rivet and the left cut-in point of the rivet cutting into the bottom plate, this value is the interlocking amount on the left; 3) LR (in mm): the horizontal distance between the right tip of the tail portion of the rivet and the right cut-in point of the rivet cutting into the bottom plate, this value is the interlocking amount on the right; and 4) Y (in mm): flatness, for the countersunk rivet, the surface of the rivet head should be flush with the base surface of the top plate, and for the pan head rivet, the lower portion of the rivet head should be tightly attached to the top plate, as shown in FIG. 2.

According to the above parameters, whether defects exist in each riveting point or not can be specifically judged, and then whether each riveting point is qualified or not is judged. After the riveting is completed, if the defects exist, it will mainly be that the thickness of the plates is unqualified, the interlocking value is unqualified, and the height of the rivet head is unqualified. The defects are internal defects of the rivets and can not be observed from the appearances, it needs to cut the riveting points, and measure with rulers to obtain the defects. If such defects occur in the production lines of automatic production and are not found, it will lead to the disqualification of batches of white vehicle bodies, or even the serious results that the white vehicle bodies are abandoned.

In the related art, the SPR quality inspection method mainly includes the following steps: carrying out sampling inspection at a certain station in the automatic production line, visually inspecting the appearances of the riveting points and measuring the heights of the rivet heads using an instrument, determining whether there is a change as compared with those before the riveting, and judging the riveting quality.

However, the manual inspection method in the related art has the following problems.
1. With the existing operation method, the riveting points need to be manually checked, manual inspection can only judge the change of the appearance and the change of the height Y of the rivet head, and the internal quality of the rivets cannot be determined, and the accuracy is low.
2. Only part of the riveting points can be checked using the existing operation method, and not all the riveting points can be checked, a special inspection station is set, special personnel and space are needed, the production takt is affected, and the manual inspection efficiency is low.

In order to ensure the accurate determination of the riveting quality, and prevent a large number of white vehicle bodies with SPR riveting quality problems from be produced, a more accurate method for monitoring riveting quality of SPR is needed.

### SUMMARY

In order to overcome the defects in the related art, the present invention aims to provide a method for automatically determining quality of a self-piercing riveting process, so as to ensure accurately identifying quality of riveting.

The present invention provides a method for automatically determining quality of a self-piercing riveting process including the following operations:
S1, inputting standard values, where standard values of riveting pressures F_{B}, Fc, F_{D}, standard values of slopes Kₘₐₓ, Kₘₐₓ/2, and standard values of positions Xₖₘₐₓ, Xₖₘₐₓ/2, K_{CDmin} are input to a server;
S2, acquiring data in real-time, where riveting forces F in the riveting process and displacements X corresponding to the riveting forces F are acquired in real time through a data acquisition system, and measured values of riveting pressures F_{B1}, F_{C1}, and F_{D1}, measured values of slopes Kₘₐₓ₁, Kₘₐₓ₁/2, and K_{CDmin1}, and measured values of the positions Xₖₘₐₓ and Xₖₘₐₓ/2 are acquired ;
S3, comparing data and determining quality of riveting, where the measured values of the riveting pressures F_{B1}, F_{C1} and F_{D1}, the measured values of the slopes Kₘₐₓ₁, Kₘₐₓ₁/2 and K_{CDmin1}, and the measured values of the positions Xₖₘₐₓ₁ and Xₖₘₐₓ₁/2 are compared with the standard values of the riveting pressures F_{B}, Fc, and F_{D}, the standard values of the slopes Kₘₐₓ, Kₘₐₓ/2, and K_{CDmin}, and the standard values of the positions Xₖₘₐₓ and Xₖₘₐₓ/2 in the server correspondingly; specifically, the measured values of the riveting pressures F_{B1}, F_{C1}, and F_{D1} are compared with the standard values of the riveting pressures F_{B}, Fc and F_{D} in the server correspondingly, and the measured values of the slopes Kₘₐₓ₁, Kₘₐₓ₁/2, K_{CDmin1} are compared with the standard values of the slopes Kₘₐₓ, Kₘₐₓ/2, and K_{CDmin} in the server correspondingly, and the measured values of the positions Xₖₘₐₓ₁ and Xₖₘₐₓ₁/2 are compared with the standard values of the positions Xₖₘₐₓ and Xₖₘₐₓ/2 in the server correspondingly. Thus, whether a defect exists is determined.

Further, the standard values input to the server are obtained through riveting process tests, and the riveting forces F and the displacements X corresponding to the riveting forces in the riveting process are collected by the data acquisition system connected with a riveting device during the riveting process tests.

Furthermore, through a preset internal quality determining method, the data acquisition system determines the rivet yield according to F_{B1} and F_{C1}, determines that Tmin is unqualified according to Fₘₐₓ₁ and Xₖₘₐₓ₁/2, determines that interlocking is unqualified according to Fₘₐₓ₁ and Kₘₐₓ₁, determines that a quality defect of edge cracking according to K_{CDmin1}, and determines that a riveting die is cracked according to Fₘₐₓ₁. Specifically, according to the solution, the quality defects such as the rivet yield, the unqualified Tₘᵢₙ, the unqualified interlocking, edge cracking are determined by selecting values of different groups, and the specific logic is that: actually measured values of related groups are selected and compared with the corresponding standard values, so as to determine the quality defects.

Further, B is equal to a sum of a thickness of an upper plate and a depth of a riveting die, and C is equal to a length of a rivet minus 2 mm, and D is equal to the length of the rivet minus a height of a rivet head of the rivet, F_{B1} is a riveting force corresponding to any point between 0 mm and B displacement, F_{C1} is a riveting force corresponding to any point between point B and point C; and F_{D1} is a riveting force corresponding to any point between the point C and point D. The specific corresponding determination mode is to determine according to F-X, the force and displacement curve formed by experimental data , where B, C and D refer to displacement positions in the curve, and a riveting force can be determined by combining a determined displacement position with the curve.

Further, the data acquisition system is further configured for outputting a quality report.

According to the method for automatically determining quality of a self-piercing riveting process, riveting parameters and process curves are obtained in real time by the data acquisition system, the measured values for determining quality of riveting is calculated according to the real-time change of the riveting pressure curve and information of the riveted plates, the quality of the riveting process can be automatically determined by comparing the measured values and the standard values, the efficiency of monitoring quality is improved, inspection of all the riveting points can be realized, the abandon of white vehicle bodies due to poor riveting quality is greatly reduced, and the problem that a large number of white vehicle bodies with defective quality cannot be found is avoided, and the riveting quality of the white vehicle bodies is guaranteed.

Further, the method comprises the following operations:
receiving a first riveting pressure standard value F_{B} corresponding to a displacement point B, a second riveting pressure standard value Fc corresponding to a displacement point C, a third riveting pressure standard value F_{D} corresponding to a displacement point D, a maximum riveting force standard value Fₘₐₓ, a maximum slope standard value Kₘₐₓ, a slope standard value K_{CDmin} between the displacement point C and the displacement point D and a standard value X_{Kmax} of a displacement point corresponding to Kₘₐₓ in a standard riveting pressure curve;
acquiring in real time the riveting pressures F and the displacements corresponding to the riveting pressures F, and obtaining according to the riveting pressures F and the displacement corresponding to the riveting pressure F in the riveting process, a first riveting pressure measured value F_{B1} corresponding to any displacement point between an initial displacement point and the displacement point B, a second riveting pressure measured value F_{C1} corresponding to any displacement point between the displacement point B and the displacement point C, a third riveting pressure measured value F_{D1} corresponding to any displacement point between the displacement point C and the displacement point D, and a maximum riveting force measured value Fₘₐₓ₁, a maximum slope measured value Kₘₐₓ₁, a slope measured value K_{CDmax1} between the displacement point C and the displacement point D, and a measured value Xₖₘₐₓ₁ of the displacement point corresponding to Kₘₐₓ₁ in an actual riveting pressure curve;
comparing F_{B} with F_{B1}, and Fc with F_{C1}, and determining whether rivet yield is qualified to obtain a first result;
comparing F_{D} and F_{D1}, and determining whether Xₖₘₐₓ₁ is greater than (Xₖₘₐₓ/2 + 0.5) mm, to determine whether Tₘᵢₙ is qualified and obtain a second result;
determining whether Fₘₐₓ₁ is 1.2 times as much as Fₘₐₓ and whether Kₘₐₓ₁ is 1.4 times as much as Kₘₐₓ, to determine whether interlocking is qualified and obtain a third result ;
determining whether K_{CDmin1} is less than K_{CDmin}, to determine whether a quality defect of edge cracking exists and obtain a fourth result;
obtaining quality of riveting according to the first result, the second result, the third result and the fourth result.

The beneficial effects of the above-mentioned further solution are as follows:
By comparing the standard values with the measured values in the actual riveting process, the quality state of the riveting process can be automatically determined, the efficiency of monitoring quality is improved, and sufficient detection of all the riveting points is realized, so that the riveting quality of white vehicle bodies is guaranteed, the situation that the white vehicle bodies are abandoned due to poor riveting quality is greatly reduced, and the situation that a large number of white vehicle bodies with defective quality cannot be found out is avoided. The standard values includes a first riveting pressure standard value F_{B}, a second riveting pressure standard value Fc, a third riveting pressure standard value F_{D}, a maximum riveting force standard value Fₘₐₓ, a maximum slope standard value Kₘₐₓ, the slope measured value K_{CDmin1} and the measured value Xₖₘₐₓ₁ of the displacement point corresponding to Kₘₐₓ₁. The measured values include: the first riveting pressure measured value F_{B1}, second riveting pressure measured value Fci, the third riveting pressure measured value F_{D1}, the maximum riveting force measured value Fₘₐₓ₁, the maximum slope measured value Kₘₐₓ₁, the slope measured value K_{CDmin1}, and the measured value Xₖₘₐₓ₁ of the displacement point corresponding to Kₘₐₓ₁.

Further, when F_{D1} is greater than F_{D} and F_{C1} is greater than Fc, the first result is that the rivet yield is unqualified, otherwise, the first result is that the rivet yield is qualified;
when F_{D1} is greater than F_{D} and Xₖₘₐₓ₁ is greater than (Xₖₘₐₓ/2 + 0.5) mm, the second result is that Tₘᵢₙ is unqualified, otherwise, the second result is that Tₘᵢₙ is qualified;
when Fₘₐₓ₁ is 1.2 times as much as Fₘₐₓ and Kₘₐₓ₁ is 1.4 times as much as Kₘₐₓ, the third result is that the interlocking is unqualified, otherwise, the third result is that the interlocking is qualified; and
when K_{CDmin1} is less than K_{CDmin}, the fourth result is the quality defect of edge cracking exists, otherwise, the quality defect of edge cracking does not exist.

Further, a displacement from the initial displacement point to the displacement point B is R plus P, R represents a thickness of an upper plate, and P represents a depth of a riveting die;
a displacement from the initial displacement point to the displacement point C is (W-2) mm, W represents a length of a rivet;
a displacement from the initial displacement point to the displacement point D is W minus H, H represents a height of a rivet head of the rivet; and the initial displacement point is a contact point where the rivet initially contacts the upper plate.

In addition to the objects, features, and advantages described above, there are other objects, features and advantages of the present invention. The present invention will be described in further detail below with reference to the drawings.

### BRIEF DESCRIPTION OF THE DRAWINGS

The accompanying drawings, which form a part of the present application, are used to provide a further understanding of the present invention, and the illustrative embodiments of the present invention and the description thereof are used to explain the present invention, and do not constitute an improper limitation to the present invention. In the drawings:
FIG. 1 is a structural schematic diagram showing deformation processes of plates and a rivet in a self-piercing riveting process according to the present invention;
FIG. 2 is a structural schematic diagram showing the deformed rivet and plates after self-piercing riveting of the present invention;
FIG. 3 is another structural schematic diagram showing the deformed rivet and plates after the self-piercing riveting of the present invention;
FIG. 4 is a schematic flowchart of a method for automatically determining quality of a self-piercing riveting process according to the present invention;
FIG. 5 is a diagram showing a detailed working principle of a quality acquisition system of the self-piercing riveting process according to the present invention;
FIG. 6 is a quality determination table of the quality acquisition system of the self-piercing riveting process according to the present invention;
FIG. 7 is a pressure and displacement graph of the quality acquisition system of the self-piercing riveting process of the present invention;
FIG. 8 is a slope and displacement graph of the quality acquisition system of the self-piercing riveting process according to the present invention;
FIG. 9 is another schematic flowchart of the method for automatically determining quality of the self-piercing riveting process according to the present invention.

### DETAILED DESCRIPTION OF THE EMBODIMENTS

It should be noted that, in the case of no conflict, the embodiments in the present application can be combined with each other and the features in the embodiments can be combined with each other. The present invention will be described in detail below with reference to the accompanying drawings and in combination with the embodiments.

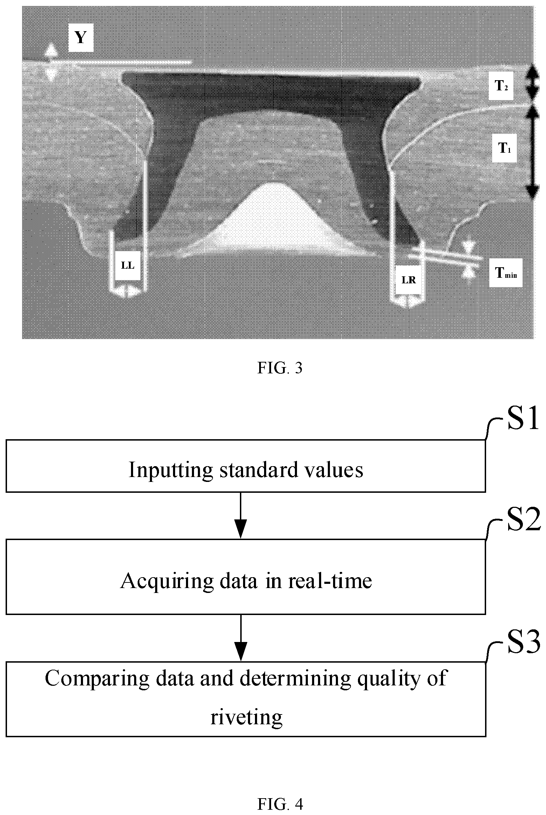

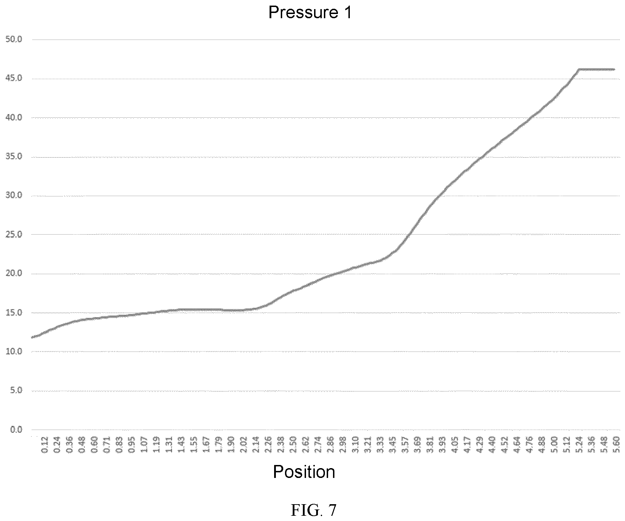

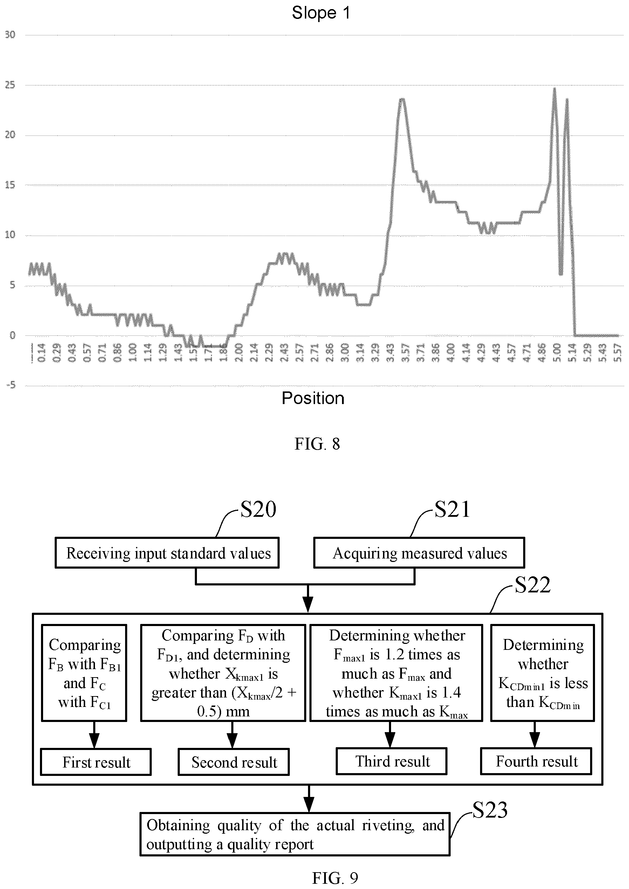

FIGS. 4-9 illustrate some embodiments according to the present invention.

As shown in FIG. 4, a method for automatically determining quality of a self-piercing riveting process includes the following operations.

S1, inputting standard values. Standard values of the riveting pressures F_{B}, Fc, F_{D}, standard values of slopes Kₘₐₓ, Kₘₐₓ/2, and standard values of positions Xₖₘₐₓ, Xₖₘₐₓ/2, and K_{CDmin} are input to a server. the slopes refer to slopes of riveting forces F in a force and displacement curve F-X, Kₘₐₓ represents the maximum slope, Kₘₐₓ/2 refers to half of the maximum slope, and K_{CDmin} represents slopes of corresponding standard riveting forces between a displacement point C and a displacement point D.

S2, acquiring data in real-time. The riveting forces F in the riveting process and displacements X corresponding to the riveting forces F are acquired in real time through a data acquisition system, and measured values of riveting pressures F_{B1}, F_{C1}, and F_{D1}, measured values of slopes Kₘₐₓ₁, Kₘₐₓ₁/2, and K_{CDmin1}, and measured values of positions Xₖₘₐₓ and Xₖₘₐₓ/2 are obtained.

S3, comparing data and determining quality of riveting. The measured values of the riveting pressures F_{B1}, F_{C1}, and F_{D1}, the measured values of the slopes Kₘₐₓ₁, Kₘₐₓ₁/2, and K_{CDmin1}, and the measured values of the positions Xₖₘₐₓ₁, Xₖₘₐₓ₁/2 are compared with the standard values of the riveting pressures F_{B}, Fc, and F_{D}, the standard values of the slopes Kₘₐₓ, Kₘₐₓ/2, and K_{CDmin}, and the standard values of the positions Xₖₘₐₓ and Xₖₘₐₓ/2 in the server correspondingly. Specifically, the measured values of the riveting pressures F_{B1}, F_{C1}, and F_{D1} are compared with the standard values of the riveting pressures F_{B}, Fc and F_{D} in the server correspondingly, and the measured values of the slopes Kₘₐₓ₁, Kₘₐₓ₁/2, K_{CDmin1} are compared with the standard values of the slopes Kₘₐₓ, Kₘₐₓ/2, and K_{CDmin} in the server correspondingly, and the measured values of the positions X_{KMAX1} and X_{Kmax1}/2 are compared with the standard values of the positions X_{Kmax} and X_{Kmax}/2 in the server correspondingly. Thus, whether a defect exists is determined.

B is equal to the sum of a thickness of an upper plate and a depth of the riveting die, C is equal to a length of a rivet minus 2 mm, D is equal to the length of the rivet minus a height of a rivet head of the rivet, F_{B1} is the riveting force corresponding to any point between 0 mm and B displacement, F_{C1} is the riveting force corresponding to any point between the point B and point C, and F_{D1} is the riveting force corresponding to any point between the point C and the point D. The specific determination method is carried out according to the force and displacement curve F-X formed by experimental data.

In particular, defects of the riveting are determined according to each measured value in the following.

If the measured values F_{b1} and F_{c1} are both greater than the standard values F_{b} and F_{c} configured in the system, it is determined and output that rivet yield is unqualified.

If the measured value F_{D1} is greater than the configuration value and the measured value X_{Kmax1}/2 is greater than the configuration value standard value X_{Kmax}/2 for more than 0.5, it is output that Tₘᵢₙ is unqualified.

If the measured value Fₘₐₓ₁ is 1.2 times that of the system configured standard value Fₘₐₓ, and the measured value Kₘₐₓ₁ is 1.4 times that of the system configured standard value Kₘₐₓ, it is output that interlocking is unqualified.

If the measured value K_{CDmin1} is less than the system configured standard value K_{CDmin}, it is output a quality defect of edge cracking.

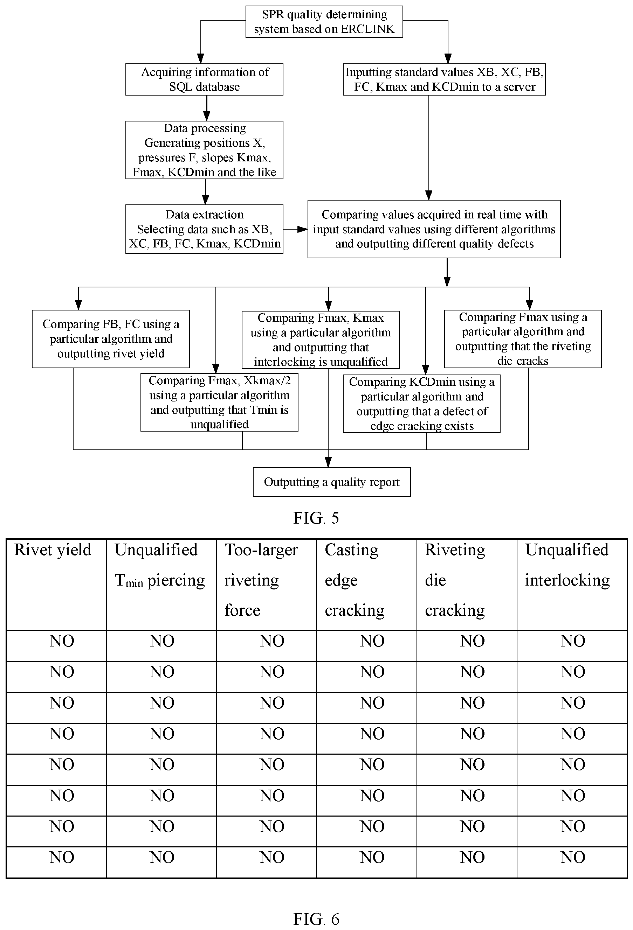

If the measured value Fₘₐₓ₁ is m times that of the system configured standard value Fₘₐₓ, and m∈(0, 0.5), it is determined that the riveting is qualified. Otherwise, the riveting is unqualified, and an early warning is sent, as shown in FIG. 5.

Specifically, a riveting database is obtained through a large number of riveting process tests. During the riveting process tests, the riveting forces F and the corresponding displacements X in the riveting process are collected by the data acquisition system connected with a riveting device, so that the riveting database is formed. The riveting force F and displacement X curve and the slope K of riveting force and displacement X curve are generated based on the data in the riveting database through fitting algorithms, as shown in FIG. 5. As shown in FIG. 6, "NO" indicates that the riveting quality of each riveting point is qualified, and if "YES" appears, it indicate that a fault occurs.

Specifically, the method for determining the standard values includes: selecting riveting data of riveting points for which the rivet yield are qualified, Tₘᵢₙ piercing is qualified, the interlocking is qualified, and quality defects such as edge cracking do not exist from the riveting database, and calculating the measured or calculated values of the riveting pressures F_{B}, Fc, and F_{D}, the measured or calculated values of the slopes Kₘₐₓ, Kₘₐₓ/2 and the measured or calculated values of the positions X_{Kmax} and X_{Kmax}/2 corresponding to those riveting data, and calculating the standard values of those values through a specific algorithm.

By means of the preset quality judgment standard in the acquisition system, whether a riveting point is qualified or not can be judged, whether quality defects such as unqualified rivet yield, unqualified Tₘᵢₙ piercing, unqualified interlocking, and edge cracking exists in each riveting point can be further judged, and a quality report is generated.

The technical personnel or operators can judge whether a riveting point is qualified or not according to data and corresponding quality state in the quality report output by the data acquisition system, and meanwhile, the subsequent quality tracking can be facilitated through exporting the quality report.

Preferably, in the above technical solution, the method includes the following operations:
S10, receiving a first riveting pressure standard value F_{B} corresponding to the displacement point B, a second riveting pressure standard value Fc corresponding to the displacement point C, a third riveting pressure standard value F_{D} corresponding to the displacement point D, a maximum riveting force standard value Fₘₐₓ, a maximum slope standard value Kₘₐₓ, a slope standard value K_{CDmin} between the displacement point C and the displacement point D and the standard value X_{Kmax} of a displacement point corresponding to Kₘₐₓ in a standard riveting pressure curve;
S11, acquiring in real time the riveting pressures F and the displacements corresponding to the riveting pressures F, and obtaining according to the riveting pressures F in the actual riveting process and the displacements corresponding to the riveting pressures F, a first riveting pressure measured value F_{B1} corresponding to any displacement point between an initial displacement point and the displacement point B, a second riveting pressure measured value F_{C1} corresponding to any displacement point between the displacement point B and the displacement point C, a third riveting pressure measured value F_{D1} corresponding to any displacement point between the displacement point C and the displacement point D, and a maximum riveting force measured value Fₘₐₓ₁, a maximum slope measured value Kₘₐₓ₁, a slope measured value K_{CDmax1} between the displacement point C and the displacement point D, and a measured value Xₖₘₐₓ₁ of the displacement point corresponding to Kₘₐₓ₁ in an actual riveting pressure curve.
S12, comparing F_{B} with F_{B1}, and Fc with Fci, and determining whether the rivet yield is qualified to obtain a first result;
comparing F_{D} and F_{D1}, and determining whether X_{Kmax1} is greater than (X_{Kmax}/2 + 0.5) mm, to determine whether Tₘᵢₙ is qualified and obtain a second result;
determining whether Fₘₐₓ₁ is 1.2 times as much as Fₘₐₓ and whether Kₘₐₓ₁ is 1.4 times as much as Kₘₐₓ, to determine whether the interlocking is qualified and obtain a third result;
determining whether Kₘᵢₙ₁ is less than Kmin, to determine whether a quality defect of edge cracking exists and obtain a fourth result;
obtaining quality of riveting according to the first result, the second result, the third result and the fourth result.

By comparing the standard values with the actually measured values in the actual riveting process, the quality state of the riveting process can be automatically determined, the efficiency of monitoring quality is improved, and sufficient detection of all the riveting points is realized, so that the riveting quality of white vehicle bodies is guaranteed, the situation that the white vehicle bodies are abandoned due to poor riveting quality is greatly reduced, and the situation that a large number of white vehicle bodies with defective quality cannot be found out is avoided. The standard values include a first riveting pressure standard value F_{B}, a second riveting pressure standard value Fc, a third riveting pressure standard value F_{D}, a maximum riveting force standard value Fₘₐₓ, a maximum slope standard value Kₘₐₓ, the slope measured value K_{CDmin1} and the measured value Xₖₘₐₓ₁ of the displacement point corresponding to Kₘₐₓ₁. The measured values include: the first riveting pressure measured value F_{B1}, second riveting pressure measured value F_{C1}, the third riveting pressure measured value F_{D1}, the maximum riveting force measured value Fₘₐₓ₁, the maximum slope measured value Kₘₐₓ₁, the slope measured value K_{CDmin1}, and the measured value Xₖₘₐₓ₁ of the displacement point corresponding to Kₘₐₓ₁.

The quality state of the actual riveting includes the first result which is about whether the rivet yield is qualified, the second result which is about whether Tₘᵢₙ is qualified, and the third result which is about whether the interlocking is qualified.

Preferably, in the above technical solution:
firstly, when F_{D1} is greater than F_{D} and F_{C1} is greater than Fc, the first result is that the rivet yield is unqualified, otherwise, the first result is that the rivet yield is qualified;
secondly, when F_{D1} is greater than F_{D} and X_{Kmax1} is greater than (X_{Kmax}/2 + 0.5) mm, the second result is that Tₘᵢₙ is unqualified, otherwise, the second result is that Tₘᵢₙ is qualified;
thirdly, when Fₘₐₓ₁ is 1.2 times as much as Fₘₐₓ and Kₘₐₓ₁ is 1.4 times as much as Kₘₐₓ, the third result is that the interlocking is unqualified, otherwise, the third result is that the interlocking is qualified;
fourthly, when K_{CDmin1} is less than K_{CDmin}, the fourth result is the quality defect of edge cracking exists, otherwise, the quality defect of edge cracking does not exist.

The displacement from the initial displacement point to the displacement point B is R plus P, where R represents the thickness of the upper plate, and P represents the depth of the riveting die.

The displacement from the initial displacement point to the displacement point C is (W-2) mm, where W represents the lenght of the rivet.

The displacement from the initial displacement point to the displacement point D is (W-H), where H represents the height of the rivet head.

The initial displacement point is a contact point where the rivet initially contacts the upper plate.

Specifically, a large number of riveting process tests can be carried out in advance, and during the riveting process tests, the riveting forces F in the riveting process and the displacements X corresponding to the riveting forces F are collected by the data acquisition system connected with the riveting device, so that the riveting database is formed. The riveting forces F and the displacements X corresponding to the riveting forces F can be understood as follows. For example, one riveting force F is acquired every 1 mm displacement, or five riveting forces are acquired every 1 mm displacement, which can be adjusted according to actual conditions, and details are not described herein. The riveting forces can be obtained through a force sensor, and the displacements can be obtained through a distance sensor, the selection and mounting of the force sensor and the distance sensor are known to a person skilled in the art, for which details are not described here. The data, namely the riveting forces F and the displacements X corresponding to the riveting forces F, of each riveting process in the database are processed, and a plurality of riveting force F and displacement X curves as shown in FIG. 5, and a slope K of riveting force and displacement X curve as shown in FIG. 6, are generated through the fitting algorithms, which are also known to a person skilled in the art, and details are not described here.

The process for determining the standard values includes: selecting data of riveting points for which the rivet yield are qualified, Tₘᵢₙ piercing is qualified, the interlocking is qualified, and quality defects such as edge cracking do not exist from the riveting database, and calculating the measured or calculated values of the riveting pressures F_{B}, Fc, and F_{D}, the measured or calculated values of the slopes Kₘₐₓ, Kₘₐₓ/2 and the measured or calculated values of the positions X_{Kmax} and X_{Kmax}/2 corresponding to those riveting data, and calculating the standard values of those parameters through a specific algorithm, thereby obtaining relationships among the first result, the second result, the third result and the fourth result with those parameters, that is to say, the first result, the second result, the third result and the fourth result are obtained through a large number of riveting process tests.

The method for automatically determining quality of the self-piercing riveting process of the present application is set forth in another embodiment in the following.

S20, receiving input standard values.

Specially, standard values input by a user are received. The user can obtain the standard values by searching in the riveting database, where the standard values include a first riveting pressure standard value F_{B}, a second riveting pressure standard value Fc, a third riveting pressure standard value F_{D}, a maximum riveting force standard value Fₘₐₓ, a maximum slope standard value Kₘₐₓ, a slope measureed value K_{CDmax1}, and a measured value Xₖₘₐₓ₁ of a displacement point corresponding to Kₘₐₓ₁.

S21, acquiring measured values.

The measured values are acquired based on the riveting pressures F and the displacements corresponding to the riveting pressures F collected in real time by the data acquisition system, where the measured values include: a first riveting pressure measured value F_{B1}, a second riveting pressure measured value Fci, a third riveting pressure measured value F_{D1}, a maximum riveting force measured value Fₘₐₓ₁, a maximum slope measured value Kₘₐₓ₁, a slope measured value K_{CDmax1}, and a measured value Xₖₘₐₓ₁ of a displacement point corresponding to Kₘₐₓ₁

S22, obtaining a first result, a second result, a third result, and a fourth result.

Firstly, comparing F_{B} with F_{B1}, and Fc with F_{C1}, and determining whether the rivet yield is qualified to obtain a first result:
Specifically, when F_{D1} is greater than F_{D} and F_{C1} is greater than Fc, the first result is that rivet yield is not qualified, otherwise, the first result is that the rivet yield is qualified.

Secondly, comparing F_{D} with F_{D1}, and determining whether Xₖₘₐₓ₁ is greater than (Xₖₘₐₓ/2 + 0.5) mm, to determine whether Tₘᵢₙ is qualified and obtain a second result.

Specifically, when F_{D1} is greater than F_{D} and X_{Kmax1} is greater than (X_{Kmax}/2 + 0.5) mm, the second result is that Tₘᵢₙ is unqualified, otherwise, the second result is that Tₘᵢₙ is qualified.

Thirdly, determining whether Fₘₐₓ₁ is 1.2 times as much as Fₘₐₓ and whether Kₘₐₓ₁ is 1.4 times as much as Kₘₐₓ, to determine whether interlocking is qualified and obtain a third result.

Specifically, when Fₘₐₓ₁ is 1.2 times as much as Fₘₐₓ and whether Kₘₐₓ₁ is 1.4 times as much as Kₘₐₓ, the third result is that the interlocking is unqualified, otherwise, the third result is that the interlocking is qualified.

Fourthly, determining whether K_{CDmin1} is less than K_{CDmin}, to determine whether there is a quality defect of edge cracking or not and obtain a fourth result.

When K_{CDmin1} is less than K_{CDmin}, the fourth result is that the quality defect of edge cracking exists, otherwise, the quality defect of edge cracking does not exist.

S23, obtaining quality of the actual riveting, and outputting a quality report. Specifically, the quality of the actual riveting is obtained according to the first result, the second result, the third result and the fourth result, and a quality report is obtained, the quality report can be in a form of an Excel table or a Word file, so that a user can conveniently check.

The above description is only preferred embodiments of the present invention and is not intended to limit the present invention. For a person skilled in the art, there can be various modifications and variations of the present invention. Any modification, equivalent replacement, improvement and the like made within the spirit and principle of the present invention shall fall within the claimed scope of the present invention.

## Claims

1. A method for automatically determining quality of a self-piercing riveting process comprising the following operations:
S1, inputting standard values, wherein standard values of riveting pressures F_{B}, Fc, F_{D}, standard values of slopes Kₘₐₓ, Kₘₐₓ/2, and standard values of positions Xₖₘₐₓ, Xₖₘₐₓ/2, K_{CDmin} are input to a server;
S2, acquiring data in real-time, wherein riveting forces F in the riveting process and displacements X corresponding to the riveting forces F are acquired in real time through a data acquisition system, and measured values of riveting pressures F_{B1}, F_{C1}, and F_{D1}, measured values of slopes Kₘₐₓ₁, Kₘₐₓ₁/2, and K_{CDmin1}, and measured values of the positions Xₖₘₐₓ and Xₖₘₐₓ/2 are acquired ;
S3, comparing data and determining quality of riveting, wherein the measured values of the riveting pressures F_{B1}, F_{C1} and F_{D1}, the measured values of the slopes Kₘₐₓ₁, Kₘₐₓ₁/2 and K_{CDmin1}, and the measured values of the positions Xₖₘₐₓ₁ and Xₖₘₐₓ₁/2 are compared with the standard values of the riveting pressures F_{B}, Fc, and F_{D}, the standard values of the slopes Kₘₐₓ, Kₘₐₓ/2, and K_{CDmin}, and the standard values of the positions Xₖₘₐₓ and Xₖₘₐₓ/2 in the server correspondingly; and quality of the riveting process is automatically determined.

2. The method for automatically determining quality of the self-piercing riveting process according to claim 1, wherein the standard values are obtained through riveting process tests, and the riveting forces F and the displacements X corresponding to the riveting forces in the riveting process are collected by the data acquisition system connected with a riveting device during the riveting process tests.

3. The method for automatically determining quality of the self-piercing riveting process according to claim 1, wherein through a preset internal quality determining method, the data acquisition system determines rivet yield according to F_{B1} and F_{C1}, determines that Tₘᵢₙ is unqualified according to Fₘₐₓ₁ and Xₖₘₐₓ₁/2, determines that interlocking is unqualified according to Fₘₐₓ₁ and Kₘₐₓ₁, determines that a quality defect of edge cracking according to K_{CDmin1}, and determines that a riveting die is cracked according to Fₘₐₓ₁.

4. The method for automatically determining quality of the self-piercing riveting process according to claim 1, wherein B is equal to a sum of a thickness of an upper plate and a depth of a riveting die, and C is equal to a length of a rivet minus 2 mm, and D is equal to the length of the rivet minus a height of a rivet head of the rivet, F_{B1} is a riveting force corresponding to any point between 0 mm and B displacement, and F_{C1} is a riveting force corresponding to any point between point B and point C; and F_{D1} is a riveting force corresponding to any point between the point C and point D.

5. The method for automatically determining quality of the self-piercing riveting process according to claim 1, wherein the data acquisition system is further configured for outputting a quality report.

6. The method for automatically determining quality of the self-piercing riveting process according to claim 1, comprising the following operations:
receiving a first riveting pressure standard value F_{B} corresponding to a displacement point B, a second riveting pressure standard value Fc corresponding to a displacement point C, a third riveting pressure standard value F_{D} corresponding to a displacement point D, a maximum riveting force standard value Fₘₐₓ, a maximum slope standard value Kₘₐₓ, a slope standard value K_{CDmin} between the displacement point C and the displacement point D and a standard value X_{Kmax} of a displacement point corresponding to Kₘₐₓ in a standard riveting pressure curve;
acquiring in real time the riveting pressures F and the displacements corresponding to the riveting pressures F, and obtaining according to the riveting pressures F and the displacement corresponding to the riveting pressure F in the riveting process, a first riveting pressure measured value F_{B1} corresponding to any displacement point between an initial displacement point and the displacement point B, a second riveting pressure measured value F_{C1} corresponding to any displacement point between the displacement point B and the displacement point C, a third riveting pressure measured value F_{D1} corresponding to any displacement point between the displacement point C and the displacement point D, and
a maximum riveting force measured value Fₘₐₓ₁, a maximum slope measured value Kₘₐₓ₁, a slope measured value K_{CDmax1} between the displacement point C and the displacement point D, and a measured value Xₖₘₐₓ₁ of the displacement point corresponding to Kₘₐₓ₁ in an actual riveting pressure curve;
comparing F_{B} with F_{B1}, and Fc with F_{C1}, and determining whether rivet yield is qualified to obtain a first result;
comparing F_{D} and F_{D1}, and determining whether X_{Kmax1} is greater than (X_{Kmax}/2 + 0.5) mm, to determine whether Tₘᵢₙ is qualified and obtain a second result;
determining whether Fₘₐₓ₁ is 1.2 times as much as Fₘₐₓ and whether Kₘₐₓ₁ is 1.4 times as much as Kₘₐₓ, to determine whether interlocking is qualified and obtain a third result ;
determining whether K_{CDmin1} is less than K_{CDmin}, to determine whether a quality defect of edge cracking exists and obtain a fourth result;
obtaining quality of riveting according to the first result, the second result,
the third result and the fourth result.

7. The method for automatically determining quality of the self-piercing riveting process according to claim 6, wherein
when F_{D1} is greater than F_{D} and F_{C1} is greater than Fc, the first result is that the rivet yield is unqualified, otherwise, the first result is that the rivet yield is qualified;
when F_{D1} is greater than F_{D} and X_{Kmax1} is greater than (X_{Kmax}/2 + 0.5) mm, the second result is that Tₘᵢₙ is unqualified, otherwise, the second result is that Tₘᵢₙ is qualified;
when Fₘₐₓ₁ is 1.2 times as much as Fₘₐₓ and Kₘₐₓ₁ is 1.4 times as much as Kₘₐₓ, the third result is that the interlocking is unqualified, otherwise, the third result is that the interlocking is qualified; and
when K_{CDmin1} is less than K_{CDmin}, the fourth result is the quality defect of edge cracking exists, otherwise, the quality defect of edge cracking does not exist.

8. The method for automatically determining quality of the self-piercing riveting process according to claim 6 or 7, wherein,
a displacement from the initial displacement point to the displacement point B is R plus P, R represents a thickness of an upper plate, and P represents a depth of a riveting die;
a displacement from the initial displacement point to the displacement point C is (W-2) mm, W represents a length of a rivet;
a displacement from the initial displacement point to the displacement point D is Wminus H, H represents a height of a rivet head of the rivet; and the initial displacement point is a contact point where the rivet initially contacts the upper plate.
